# EUROPEAN PATENT APPLICATION

(11) **EP 4 656 746 A1**
(43) Date of publication of application: **03.12.2025**
(21) Application number: 24178794.4
(22) Date of filing: 29.05.2024
(51) Int. Cl.: C22B 3/02, C22B 3/04, C22B 3/06, C22B 3/08, C22B 3/10, C22B 7/00, C22B 7/04

(54) **METHOD FOR CONTINUOUSLY EXTRACTING METAL COMPOUNDS FROM SLAG**

(71) Applicant: AIK Technik AG, 6210 Sursee (CH)
(72) Inventor: BUCHMANN, Patrick, 6210 Sursee (CH)
(74) Representative: Maiwald GmbH

(57) **Abstract**

The present invention relates to a method for continuously extracting metal compounds and/or other contaminations from a slag stream
a unit for continuously extracting metal compounds and/or other contaminations from a slag stream, and
use of the method and/or the unit as described above or below for continuously extracting metal compounds and/or other contaminations from a slag stream.

## Description

The present invention relates to a method for continuously extracting metal compounds and/or other contaminations from a slag stream;
a unit for continuously extracting metal compounds and/or other contaminations from a slag stream, and
use of the method and/or the unit as described above or below for continuously extracting metal compounds and/or other contaminations from a slag stream.

### Technical background

Slag, also called bottom ash, from incineration processes such as waste incineration or sewage sludge incineration are usually disposed inland filling or to a lesser extent used as additive for cement and concrete in construction industry and road construction.

Due to higher environmental constrains especially in Europe but also increasingly in other countries around the world bottom ash underlies governmental regulations especially regarding the content of potentially environmentally harmful components such as heavy metal compounds.

Therefore, in order to recycle bottom ash to the economy (circular economy) the bottom ash must be treated in order to reduce the amount of said potentially environmentally harmful.

Additionally, bottom ash contains high amounts of other valuable compounds such as metals, like iron, aluminium, copper, and other non-ferrous metals and heavy metals, which can be recycled so that the environmental damages of their primary production in mining and smelting can be significantly reduced. Additionally, the dependence on import of metals from primary production in unstable word regions can be reduced.

By recycling metals from bottom ashes it is also possible to significantly reduce the amount of material to be disposed in land filling.

Overall recycling metals from bottom ashes reduces the loss of resources and environmental damages and increases supply security.

Generally, methods for recovering metals from mixed materials involve the extraction of metal compounds by solving the metal compounds in acidic liquids.

In industrial extraction processes the mixed materials are usually introduced into an extraction reactor, such as a leaching reactor, in which the mixed materials are brought into contact with an acidic liquid.

In some embodiments as e.g. described in US 2018/312 985 A1 the mixed materials are introduced into a rotatable container, which is placed into a vessel, which contains an acidic liquid. By rotating the container in said acidic liquid it is ensured that the mixed materials in the container are brought into contact with the acidic liquid and the metal compounds comprised in the mixed materials brought in solution. The solved metal compounds can then be separated from the residual particulate material of the mixed material and further processed to obtain the metals and metal compounds.

The industrial processes of the state of the art have the drawback that they can only be run in batch mode. This means that the rotatable container is filled with the mixed materials outside of the vessel, which contains the acidic liquid and then put into said vessel in which it is rotated. After solving the metal compounds out of the mixed materials, the container is again withdrawn from the vessel and the liquid in the vessel, which includes the solved metal compounds are further processed.

A continuous process in which continuously mixed materials are introduced and withdrawn from a reactor and brought into contact with an acidic liquid would have the technical benefits of maintaining the mixed materials and the acidic liquid in closed housings, which reduces the risks of contamination or environmental hazards, of reduced operational efforts, as the container does not need to be positioned into the vessel and removed from the vessel, and a more defined and controllable extraction process, which is based on the residence time of the mixed materials in the reactor.

Thus, there is a need for a method for continuously extracting metal compounds and/or other contaminations from a slag stream and a unit in which this method can be applied.

### Summary of the invention

In a first aspect the present invention relates to a method for continuously extracting metal compounds and/or other contaminations from a slag stream comprising the steps of:
a) Continuously introducing a first slag stream comprising metal compounds and/or other contaminations into a leaching reactor;
b) Continuously introducing a washing fluid, preferably an acidic washing fluid into the leaching reactor;
c) Contacting the slag stream with the washing fluid, preferably the acidic washing fluid in the leaching reactor, whereby the washing fluid, preferably the acidic washing fluid chemically reacts with the metal compounds and/or other contaminations in the slag to obtain soluble metal compounds and/or soluble other contaminations;
d) Continuously removing a second slag stream from the leaching reactor;
e) Continuously removing washing fluid, preferably acidic washing fluid comprising soluble metal compounds and/or soluble other contaminations from the leaching reactor;
f) Continuously exchanging the washing fluid, preferably the acidic washing fluid, which has been removed from the leaching reactor,
whereby the weight content of the metal compounds and/or other contaminations in the second slag stream is lower than the weight content of the metal compounds and/or other contaminations in the first slag stream.

In a second aspect the present invention relates to a unit for continuously extracting metal compounds and/or other contaminations from a slag stream comprising
- a leaching reactor;
- means for exchanging the washing fluid, preferably the acidic washing fluid;
- means for continuously transporting a first slag stream to the leaching reactor;
- means for continuously transporting washing fluid, preferably the acidic washing fluid to the leaching reactor;
- means for continuously transporting a second slag stream from the leaching reactor;
- means for continuously transporting washing fluid, preferably acidic washing fluid comprising soluble metal compounds and/or soluble contaminations from the leaching reactor to the means for exchanging the washing fluid, preferably the washing acidic fluid.

The unit is preferably adapted as such that the method for continuously extracting metal compounds and/or other contaminations from a slag stream as described above or below in all aspect can be applied in said unit.

In a third aspect the present invention relates to the use of the method and/or the unit as described above or below for continuously extracting metal compounds and/or other contaminations from a slag stream.

It is preferred that all aspects and embodiments of the method and/or unit as described above or below apply to the use of said third aspect.

### Brief Description of the Figure

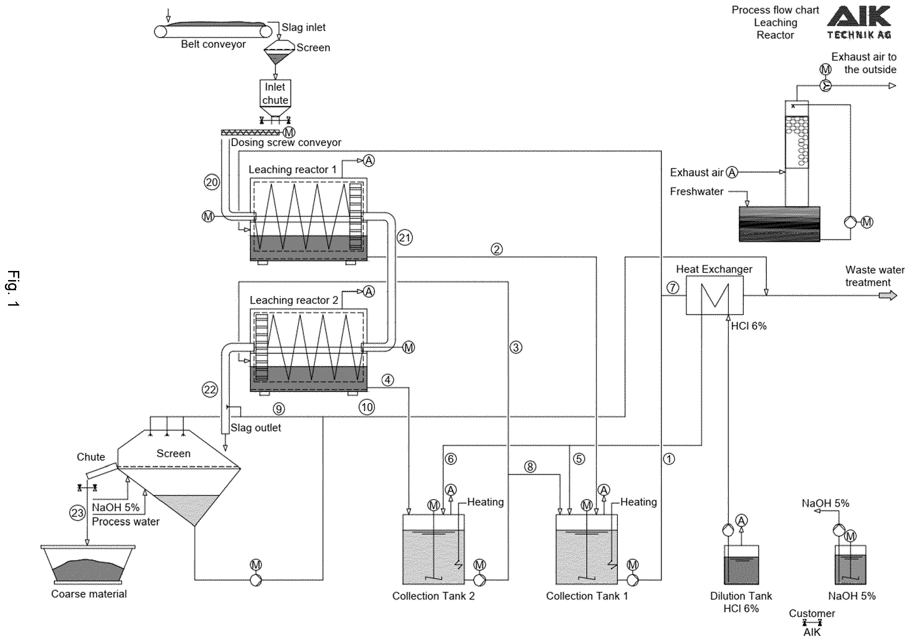

Fig 1 shows a schematic drawing of a preferred embodiment of the invention in which two leaching reactors are connected in series.

### Detailed Description of the invention

### Method

In a first aspect the present invention relates to a method for continuously extracting metal compounds and/or other contaminations from a slag stream comprising the steps of:
a) Continuously introducing a first slag stream comprising metal compounds and/or other contaminations into a leaching reactor;
b) Continuously introducing a washing fluid, preferably an acidic washing fluid into the leaching reactor;
c) Contacting the slag stream with the washing fluid, preferably the acidic washing fluid in the leaching reactor, whereby the washing fluid, preferably the acidic washing fluid chemically reacts with the metal compounds and/or other contaminations in the slag to obtain soluble metal compounds and/or soluble other contaminations;
d) Continuously removing a second slag stream from the leaching reactor;
e) Continuously removing washing fluid, preferably acidic washing fluid comprising soluble metal compounds and/or soluble other contaminations from the leaching reactor;
f) Continuously exchanging the washing fluid, preferably the acidic washing fluid, which has been removed from the leaching reactor,
whereby the weight content of the metal compounds and/or other contaminations in the second slag stream is lower than the weight content of the metal compounds and/or other contaminations in the first slag stream.

The first slag stream generally originates from an incineration processes such as waste incineration or sewage sludge incineration or other industrial processes in which a slag stream in obtained usually as waste stream and can be stored before introducing the slag stream into the leaching reactor.

The first slag stream comprises metal compounds, such as such as metals, like iron, aluminium, copper, and other non-ferrous metals and heavy metals.

Further, the first slag stream can comprise other contaminations such as organic compounds or salts.

The first slag stream can be a stream of solid slag particles or a slurry of slag particles in a liquid, depending on its origin and/or on preceding processing steps, like washing steps.

Usually the first slag stream can be transported by any suitable means of transportation, such one or more conveyors, like belt conveyors, or pumped through pipelines, depending on its state.

Before introducing the first slag stream into the leaching reactor the particle size of the slag particles can be adapted e.g. by sieving and/or milling.

The particle size of the slag particles is preferably in the range of from 1 to 50 mm, more preferably from 2 to 40 mm and most preferably from 5 to 20mm.

The first slag stream is continuously introduced into the leaching reactor.

Further, a washing fluid is continuously introduced into the leaching reactor.

The washing fluid preferably is an acidic washing fluid, i.e. having a pH below 7, such as from 0 to below 7.

Suitable washing fluids are liquid washing fluids, preferably aqueous washing fluids. The washing fluids thereby can be acidic wastewater, which is recycled from a different washing step of the incineration process, such as e.g. the acidic scrubber wastewater, which is recycled from the wet flue gas cleaning.

The washing fluid is preferably a water diluted protonic acid, preferably water diluted hydrochloric acid or water diluted sulphuric acid.

The washing fluid preferably has a content of protonic acid, preferably hydrochloric acid or sulphuric acid, in the range of from 1.0 to 15.0 %, preferably 2.5 to 12.5 %, more preferably from 3.5 to 10.0 %, most preferably from 5.0 to 7.5 %.

The leaching reactor can be any leaching reactor suitable for continuously extracting metal compounds and/or other contaminations from a slag stream.

This means that the leaching reactor must have an inlet for the first slag stream through which the first slag stream is continuously introduced, an inlet for the washing fluid though which the washing fluid is continuously introduced, means for contacting the first slag stream and the washing fluid, an outlet, through which the second slag stream is continuously removed and an outlet, though which the washing fluid is continuously removed.

In one embodiment the first slag stream and the washing fluid are combined before being introduced into the leaching reactor as a single combined stream. In said embodiment only one inlet for continuously introducing the combined stream is needed. In a further embodiment the second slag stream and the washing fluid are separated after being removed from the leaching reactor as a single combined stream. In said embodiment only one outlet for continuously removing the combined stream is needed. The means for contacting the slag stream and the washing fluid in the leaching reactor can be any suitable means for mixing a particulate material with a liquid. Such means can be e.g. a stirrer, or a rotating washing drum, preferably a rotating washing drum.

The first slag stream and the washing fluid are contacted, preferably mixed in the leaching reactor, preferably in the means for contacting the first slag stream and the washing fluid.

In one embodiment the first slag stream and the washing fluid are contacted for the first time in the leaching reactor. In this embodiment the first slag stream and the washing fluid are introduced into the leaching reactor as separate streams through separate inlets.

In another embodiment the first slag stream and the washing fluid are contacted for the first time upstream from the leaching reactor. In this embodiment the first slag stream and the washing fluid are introduced into the leaching reactor as combined stream through a single inlet. Thereby the inlet for the first slag stream can comprises an connection for introducing the washing fluid outside of the reactor so that the washing fluid is combined with the first slag stream in the inlet and is introduced into the reactor together with the first slag stream through the inlet for the first slag stream.

Thereby the washing fluid, preferably the acidic washing fluid chemically reacts with the metal compounds and/or other contaminations in the slag to obtain soluble metal compounds and/or soluble other contaminations.

The soluble metal compounds and/or soluble other contaminations preferably are solved in the washing fluid.

The second slag stream and the washing fluid are continuously removed from the leaching reactor.

Thereby in one embodiment the second slag stream and the washing fluid are removed as separate streams from the leaching reactor. In said embodiment the second slag stream and the washing fluid are preferably removed through separate outlets.

In another embodiment the second slag stream and the washing fluid are removed as a combined stream from the leaching reactor. In said embodiment the second slag stream and the washing fluid are preferably removed through a single outlet.

In said embodiment the combined stream of second slag stream and the washing liquid is preferably separated downstream from the leaching reactor. Suitable methods for separating the second slag stream and the washing liquid are any methods suitable for separating a particulate stream and a liquid stream such as sieving, filtering, sedimentation, centrifugation or others.

Suitable means for separating the second slag stream and the washing liquid are any means for separating a particulate stream and a liquid stream such as a sieve, filter, membrane, sedimenter, centrifuge or others.

The average residence time of the slag stream in the leaching reactor is usually in the range of from 5 min to 300 min, preferably from 10 min to 240 min, more preferably from 15 min to 180 min and most preferably from 30 min to 120 min.

The inlet stream for introducing the washing liquid into the reactor usually has a continuous flow rate of 5 to 75 m³/h, preferably 10 to 60 m³/h, more preferably 20 to 50 m³/h.

The outlet stream for removing the washing liquid from the reactor usually has a continuous flow rate of 5 to 75 m³/h, preferably 10 to 60 m³/h, more preferably 20 to 50 m³/h.

The continuous flow rates of the inlet stream and the outlet stream are preferably the same so that a constant amount of washing liquid is maintained in the second during operation of the reactor.

The weight content of the metal compounds and/or other contaminations in the second slag stream is lower than the weight content of the metal compounds and/or other contaminations in the first slag stream.

This means that in the leaching reactor metal compounds and/or other contaminations are removed from the slag stream, usually as soluble metal compounds and/or soluble other contaminations.

The soluble metal compounds and/or soluble other contaminations preferably as solved in the washing liquid and removed from the leaching reactor in the washing liquid.

The washing liquid removed from the leaching reactor usually comprises soluble metal compounds and/or soluble other contaminations.

Further the washing liquid removed from the leaching reactor usually is depleted from active substances for chemically reacting with metal compounds and/or other contaminations, such as acid, preferably protonic acid, like hydrochloric acid or sulphuric acid and is therefore continuously exchanged.

It is preferred that for continuously exchanging the washing liquid the washing fluid, which has been removed from the leaching reactor, is continuously introduced into a mixing vessel.

A mixing vessel can be any vessel suitable for mixing two liquids, such as a vessel with a stirrer.

Further a second washing fluid is preferably introduced, more preferably continuously introduced into the mixing vessel.

Said second washing fluid is preferably a washing fluid with a higher content of active substances for chemically reacting with metal compounds and/or other contaminations, preferably a higher acid content than the washing fluid, which has been removed from the leaching reactor.

The second washing fluid preferably is an acidic washing fluid, i.e. having a pH below 7, such as from 0 to below 7.

Suitable washing fluids are liquid washing fluids, preferably aqueous washing fluids. The second washing fluid thereby can be acidic wastewater, which is recycled from a different washing step of the incineration process, such as e.g. the acidic scrubber wastewater, which is recycled from the wet flue gas cleaning.

The second washing fluid is preferably a water diluted protonic acid, preferably water diluted hydrochloric acid or water diluted sulphuric acid.

The second washing fluid preferably has a content of protonic acid, preferably hydrochloric acid or sulphuric acid, in the range of from 1.0 to 15.0 %, preferably 2.5 to 12.5 %, more preferably from 3.5 to 10.0 %, most preferably from 5.0 to 7.5 %.

It is preferred that the second washing fluid comprises the same acid as the washing fluid, which has been removed from the leaching reactor.

It is preferred that the second washing fluid is a replenishing washing fluid which is solely used for replenishing the active substances, preferably the acid, which has been depleted in the reactor upon metal compounds and/or other contaminations in the slag in the washing fluid.

The second washing fluid is preferably stored in a storage vessel and is transported from the storage vessel to the mixing vessel.

In the storage vessel the second washing fluid in one embodiment can have a higher content of protonic acid, preferably hydrochloric acid or sulphuric acid, in the range of from 17.5 to 50.0 %, preferably 20.0 to 45.0 %, more preferably from 25.0 to 40.0 %, most preferably from 30.0 to 35.0 %.

Before being introduced into the mixing vessel the higher content of protonic acid can be diluted with an appropriate amount of liquid, preferably water to obtain a content of protonic acid, preferably hydrochloric acid or sulphuric acid, in the range of from 1.0 to 15.0 %, preferably 2.5 to 12.5 %, more preferably from 3.5 to 10.0 %, most preferably from 5.0 to 7.5 %.

Thereby, the amount of the second washing fluid, which is introduced into the mixing vessel, is preferably selected as such that active substances, preferably the acid, which has been depleted in the reactor upon metal compounds and/or other contaminations in the slag in the washing fluid is replaced, so that the mixture of the washing fluids in the mixing vessel has the same weight content of active substances, preferably acid, for chemically reacting with metal compounds and/or other contaminations as the washing fluid, which is introduced into the leaching reactor.

The washing fluid, which has been removed from the leaching reactor, and the second washing fluid, preferably the acidic washing fluid with a higher acid content are mixed in the mixing device.

Preferably, a first stream of mixed washing fluid is continuously removed from the mixing vessel.

Said first stream of mixed washing fluid preferably has the same weight content of active substances for chemically reacting with metal compounds and/or other contaminations, preferably acid, as the washing fluid, which is introduced into the leaching reactor in process step b).

Said first stream of washing fluid is then preferably introduced into the leaching reactor in process step b) as washing fluid.

As a consequence the washing fluid which has been exchanged in the washing device is preferably recycled as washing fluid in the leaching reactor in a loop.

It is further preferred that a second stream of mixed washing fluid is continuously removed from the mixing vessel.

Said second stream of mixed washing fluid preferably has the same weight content of active substances for chemically reacting with metal compounds and/or other contaminations, preferably acid, as the washing fluid, which is introduced into the leaching reactor in process step b).

Said second stream of mixed washing fluid is preferably discarded. The reason for this step is to avoid an accumulation of solved metal compounds and/or solved other contaminations in the washing liquid and to keep the amount of washing fluid in the loop constant.

In further downstream processes the solved metal compounds and/or solved other contaminations can be removed from the discarded second stream of mixed washing fluid in any suitable way known in the art.

In one embodiment the first stream of mixed washing liquid and the second stream of mixed washing liquid are removed from the mixing vessel as separate streams. In said embodiment the mixing vessel comprises two outlets for removing the first stream of mixed washing liquid and the second stream of mixed washing liquid separately.

In another embodiment the first stream of mixed washing liquid and the second stream of mixed washing liquid are removed from the mixing vessel as a combined stream. In said embodiment the mixing vessel comprises a single outlet for removing a mixed washing liquid.

Said mixed washing liquid is then separated into the first stream of mixed washing liquid and the second stream of mixed washing liquid downstream from the mixing vessel.

The second slag stream removed from the leaching reactor can either be separated from residual washing fluid or introduced in a second leaching reactor downstream from the leaching reactor.

In one embodiment the method according to the present invention only comprises a single stage for contacting the slag stream with a washing fluid in a leaching reactor.

In said embodiment the solid slag particles in the second slag stream, which has been removed from the leaching reactor is preferably separated from residual washing fluid. The second slag stream, which has been removed from the leaching reactor can be separated from residual washing fluid by any means suitable for separating a particulate material from a liquid, such as sieving, filtering, sedimentation, centrifugation or others. Suitable means for separating the second slag stream and the residual washing liquid are any means for separating a particulate stream and a liquid stream such as a sieve, filter, membrane, sedimenter, centrifuge or others.

It is preferred that the solid slag particles obtained from said separation step are contacted with a neutralizing fluid, preferably water or a basic fluid, such as water diluted alkali hydroxide, like water diluted sodium hydroxide, to neutralize the solid slag particles.

The water diluted alkali hydroxide, like water diluted sodium hydroxide, preferably has a weight content of alkali hydroxide, preferably sodium hydroxide of from 1.0 to 15.0 %, preferably 2.0 to 12.5 %, more preferably from 3.0 to 10.0 %, most preferably from 4.0 to 7.5 %.

The solid slag particles, preferably the neutralized solid slag particles, can then be stored and used e.g. in landfilling or as component in construction industry.

The residual washing liquid can either be combined with the first stream of mixed washing liquid or the second stream of mixed washing liquid.

In an alternative embodiment the method according to the present invention comprises two or more, such as two to five, preferably two to four, more preferably two or three, most preferably two stages for contacting the slag stream with a washing fluid in a leaching reactor. Said two or more stages are preferably connected in series.

In said alternative embodiment the second slag stream removed from the leaching reactor is preferably continuously introduced in a second leaching reactor. Said second leaching reactor is preferably situated downstream from the leaching reactor.

Further, a washing fluid is continuously introduced into the second leaching reactor. The washing fluid preferably is an acidic washing fluid, i.e. having a pH below 7, such as from 0 to below 7.

Suitable washing fluids are liquid washing fluids, preferably aqueous washing fluids. The washing fluids thereby can be acidic wastewater, which is recycled from a different washing step of the incineration process, such as e.g. the acidic scrubber wastewater, which is recycled from the wet flue gas cleaning.

The washing fluid is preferably a water diluted protonic acid, preferably water diluted hydrochloric acid or water diluted sulphuric acid.

The washing fluid preferably has a content of protonic acid, preferably hydrochloric acid or sulphuric acid, in the range of from 1.0 to 15.0 %, preferably 2.5 to 12.5 %, more preferably from 3.5 to 10.0 %, most preferably from 5.0 to 7.5 %.

The washing fluid which is continuously introduced into the second leaching reactor can be different from the washing fluid which is continuously introduced into the leaching reactor as described above, e.g. using a different active substance for chemically reacting with the metal compounds and/or other contaminations, such as a different acid, or a different weight content of active substance.

It is preferred that the washing fluid, which is continuously introduced into the second leaching reactor is the same as the washing fluid which is continuously introduced into the leaching reactor as described above.

The second leaching reactor can be any leaching reactor suitable for continuously extracting metal compounds and/or other contaminations from a slag stream.

This means that the leaching reactor must have an inlet for the second slag stream through which the second slag stream is continuously introduced, an inlet for the washing fluid though which the washing fluid is continuously introduced, means for contacting the second slag stream and the washing fluid, an outlet, through which a third slag stream is continuously removed and an outlet, though which the washing fluid is continuously removed.

In one embodiment the second slag stream and the washing fluid are combined before being introduced into the leaching reactor as a single combined stream. In said embodiment only one inlet for continuously introducing the combined stream is needed. In a further embodiment a third slag stream and the washing fluid are separated after being removed from the second leaching reactor as a single combined stream. In said embodiment only one outlet for continuously removing the combined stream is needed. The means for contacting the slag stream and the washing fluid in the leaching reactor can be any suitable means for mixing a particulate material with a liquid. Such means can be e.g. a stirrer, or a rotating washing drum, preferably a rotating washing drum.

It is preferred that the second leaching reactor is the same type of leaching reactor as the leaching reactor as described above.

The second slag stream and the washing fluid are contacted, preferably mixed in the second leaching reactor, preferably in the means for contacting the second slag stream and the washing fluid.

In one embodiment the second slag stream and the washing fluid are contacted for the first time in the second leaching reactor. In this embodiment the second slag stream and the washing fluid are introduced into the second leaching reactor as separate streams through separate inlets.

In another embodiment the second slag stream and the washing fluid are contacted for the first time upstream from the second leaching reactor. In this embodiment the second slag stream and the washing fluid are introduced into the second leaching reactor as combined stream through a single inlet. Thereby the inlet for the second slag stream can comprises an connection for introducing the washing fluid outside of the second reactor so that the washing fluid is combined with the second slag stream in the inlet and is introduced into the second reactor together with the second slag stream through the inlet for the second slag stream.

Thereby the washing fluid, preferably the acidic washing fluid chemically reacts with the metal compounds and/or other contaminations in the slag to obtain soluble metal compounds and/or soluble other contaminations.

The soluble metal compounds and/or soluble other contaminations preferably are solved in the washing fluid.

A third slag stream and the washing fluid are preferably continuously removed from the second leaching reactor.

Thereby in one embodiment the third slag stream and the washing fluid are removed as separate streams from the second leaching reactor. In said embodiment the third slag stream and the washing fluid are preferably removed through separate outlets.

In another embodiment the third slag stream and the washing fluid are removed as a combined stream from the second leaching reactor. In said embodiment the third slag stream and the washing fluid are preferably removed through a single outlet.

In said embodiment the combined stream of third slag stream and the washing liquid is preferably separated downstream from the second leaching reactor. Suitable methods for separating the third slag stream and the washing liquid are any methods suitable for separating a particulate stream and a liquid stream such as sieving, filtering, sedimentation, centrifugation or others.

Suitable means for separating the third slag stream and the washing liquid are any means for separating a particulate stream and a liquid stream such as a sieve, filter, membrane, sedimenter, centrifuge or others.

The average residence time of the second slag stream in the second leaching reactor is usually in the range of from 5 min to 300 min, preferably from 10 min to 240 min, more preferably from 15 min to 180 min and most preferably from 30 min to 100 min.

The inlet stream for introducing the washing liquid into the second reactor usually has a continuous flow rate of 5 to 75 m³/h, preferably 10 to 60 m³/h, more preferably 20 to 50 m³/h.

The outlet stream for removing the washing liquid from the second reactor usually has a continuous flow rate of 5 to 75 m³/h, preferably 10 to 60 m³/h, more preferably 20 to 50 m³/h.

The continuous flow rates of the inlet stream and the outlet stream are preferably the same so that a constant amount of washing liquid is maintained in the second during operation of the second reactor.

The weight content of the metal compounds and/or other contaminations in the third slag stream is preferably the same or lower than the weight content of the metal compounds and/or other contaminations in the second slag stream.

This means that in the leaching reactor metal compounds and/or other contaminations can be removed from the slag stream, usually as soluble metal compounds and/or soluble other contaminations.

The soluble metal compounds and/or soluble other contaminations preferably are solved in the washing liquid and removed from the second leaching reactor in the washing liquid.

The washing liquid removed from the second leaching reactor usually comprises soluble metal compounds and/or soluble other contaminations.

Further the washing liquid removed from the second leaching reactor usually is depleted from active substances for chemically reacting with metal compounds and/or other contaminations, such as acid, preferably protonic acid, like hydrochloric acid or sulphuric acid and is therefore continuously exchanged.

It is preferred that for continuously exchanging the washing liquid the washing fluid, which has been removed from the second leaching reactor, is continuously introduced into a second mixing vessel.

The second mixing vessel can be any vessel suitable for mixing two liquids, such as a vessel with a stirrer.

Further a second washing fluid is preferably introduced, more preferably continuously introduced into the second mixing vessel.

Said second washing fluid is preferably a washing fluid with a higher content of active substances for chemically reacting with metal compounds and/or other contaminations, preferably a higher acid content than the washing fluid, which has been removed from the second leaching reactor.

The second washing fluid preferably is an acidic washing fluid, i.e. having a pH below 7, such as from 0 to below 7.

Suitable washing fluids are liquid washing fluids, preferably aqueous washing fluids. The second washing fluid thereby can be acidic wastewater, which is recycled from a different washing step of the incineration process, such as e.g. the acidic scrubber wastewater, which is recycled from the wet flue gas cleaning.

The second washing fluid is preferably a water diluted protonic acid, preferably water diluted hydrochloric acid or water diluted sulphuric acid.

The second washing fluid preferably has a content of protonic acid, preferably hydrochloric acid or sulphuric acid, in the range of from 1.0 to 15.0 %, preferably 2.5 to 12.5 %, more preferably from 3.5 to 10.0 %, most preferably from 5.0 to 7.5 %.

It is preferred that the second washing fluid comprises the same acid as the washing fluid, which has been removed from the second leaching reactor.

It is preferred that the second washing fluid is a replenishing washing fluid which is solely used for replenishing the active substances, preferably the acid, which has been depleted in the reactor upon metal compounds and/or other contaminations in the slag in the washing fluid.

The second washing fluid is preferably stored in a storage vessel and is transported from the storage vessel to the mixing vessel.

In the storage vessel the second washing fluid in one embodiment can have a higher content of protonic acid, preferably hydrochloric acid or sulphuric acid, in the range of from 17.5 to 50.0 %, preferably 20.0 to 45.0 %, more preferably from 25.0 to 40.0 %, most preferably from 30.0 to 35.0 %.

Before being introduced into the mixing vessel the higher content of protonic acid can be diluted with an appropriate amount of liquid, preferably water to obtain a content of protonic acid, preferably hydrochloric acid or sulphuric acid, in the range of from 1.0 to 15.0 %, preferably 2.5 to 12.5 %, more preferably from 3.5 to 10.0 %, most preferably from 5.0 to 7.5 %.

The second washing fluid introduced into the second mixing vessel can be the same or different from, preferably is the same as the second washing fluid into the mixing vessel as described above.

Thereby, the amount of the second washing fluid, which is introduced into the second mixing vessel, is preferably selected as such that active substances, preferably the acid, which has been depleted in the second reactor upon metal compounds and/or other contaminations in the slag in the washing fluid is replaced, so that the mixture of the washing fluids in the mixing vessel has the same weight content of active substances, preferably acid, for chemically reacting with metal compounds and/or other contaminations as the washing fluid, which is introduced into the second leaching reactor.

The washing fluid, which has been removed from the second leaching reactor, and the second washing fluid, preferably the acidic washing fluid with a higher acid content are preferably mixed in the second mixing device.

Preferably, a third stream of mixed washing fluid is continuously removed from the second mixing vessel.

Said third stream of mixed washing fluid preferably has the same weight content of active substances for chemically reacting with metal compounds and/or other contaminations, preferably acid, as the washing fluid, which is introduced into the second leaching reactor in process step h).

Said third stream of washing fluid is then preferably introduced into the second leaching reactor in process step h) as washing fluid.

As a consequence the washing fluid which has been exchanged in the second mixing device is preferably recycled as washing fluid in the second leaching reactor in a second loop.

It is further preferred that a fourth stream of mixed washing fluid is continuously removed from the second mixing vessel.

Said fourth stream of mixed washing fluid preferably has the same weight content of active substances for chemically reacting with metal compounds and/or other contaminations, preferably acid, as the washing fluid, which is introduced into the second leaching reactor in process step h).

Said fourth stream of mixed washing fluid is preferably introduced into the mixing vessel of the first loop from which a first stream of mixed washing liquid and a second stream of mixed washing liquid are removed.

In one embodiment the third stream of mixed washing liquid and the fourth stream of mixed washing liquid are removed from the second mixing vessel as separate streams. In said embodiment the second mixing vessel comprises two outlets for removing the third stream of mixed washing liquid and the fourth stream of mixed washing liquid separately.

In another embodiment the third stream of mixed washing liquid and the fourth stream of mixed washing liquid are removed from the second mixing vessel as a combined stream. In said embodiment the second mixing vessel comprises a single outlet for removing a mixed washing liquid.

Said mixed washing liquid is then separated into the third stream of mixed washing liquid and the fourth stream of mixed washing liquid downstream from the second mixing vessel.

The third slag stream removed from the second leaching reactor can either be separated from residual washing fluid or introduced in a third leaching reactor downstream from the second leaching reactor.

In one embodiment the method according to the present invention only comprises two stages for contacting the slag stream with a washing fluid in two leaching reactors connected in series.

In said embodiment the solid slag particles in the third slag stream, which has been removed from the second leaching reactor is preferably separated from residual washing fluid.

The third slag stream, which has been removed from the second leaching reactor can be separated from residual washing fluid by any means suitable for separating a particulate material from a liquid, such as sieving, filtering, sedimentation, centrifugation or others.

Suitable means for separating the third slag stream and the residual washing liquid are any means for separating a particulate stream and a liquid stream such as a sieve, filter, membrane, sedimenter, centrifuge or others.

It is preferred that the solid slag particles obtained from said separation step are contacted with a neutralizing fluid, preferably water or a basic fluid, such as water diluted alkali hydroxide, like water diluted sodium hydroxide, to neutralize the solid slag particles.

The water diluted alkali hydroxide, like water diluted sodium hydroxide, preferably has a weight content of alkali hydroxide, preferably sodium hydroxide of from 1.0 to 15.0 %, preferably 2.0 to 12.5 %, more preferably from 3.0 to 10.0 %, most preferably from 4.0 to 7.5 %.

The solid slag particles, preferably the neutralized solid slag particles, can then be stored and used e.g. in landfilling or as component in construction industry.

The residual washing liquid can either be combined with the first stream of mixed washing liquid, the second stream of mixed washing liquid or the third stream of mixed washing liquid.

In an alternative embodiment the method according to the present invention comprises three or more, such as three to five, preferably three to four, most preferably three stages for contacting the slag stream with a washing fluid in a leaching reactor. Said three or more stages are preferably connected in series.

In said alternative embodiment the third slag stream removed from the second leaching reactor is preferably continuously introduced in a third leaching reactor. Said third leaching reactor is preferably situated downstream from the second leaching reactor. Thereby, preferably all process steps in all embodiments as described for the second stage for contacting the slag stream with a washing fluid in a leaching reactor also apply for the third and all subsequent stages for contacting the slag stream with a washing fluid in a leaching reactor.

The solid slag particles in the slag stream removed from the ultimate leaching reactor are then preferably separated from residual washing fluid and optionally neutralized as described above.

Exhaust gases, such as acidic exhaust gases, which occur at any step of the method as described above or below can be collected and discarded.

Suitably the acid is removed from the exhaust gases, e.g. by absorption, and the residual gases are optionally filtered and emitted into the environment.

### Unit

In a second aspect the present invention relates to a unit for continuously extracting metal compounds and/or other contaminations from a slag stream comprising
- a leaching reactor;
- means for exchanging the washing fluid, preferably the acidic washing fluid;
- means for continuously transporting a first slag stream to the leaching reactor;
- means for continuously transporting washing fluid, preferably the acidic washing fluid to the leaching reactor;
- means for continuously transporting a second slag stream from the leaching reactor;
- means for continuously transporting washing fluid, preferably acidic washing fluid comprising soluble metal compounds and/or soluble contaminations from the leaching reactor to the means for exchanging the washing fluid, preferably the washing acidic fluid.

The first slag stream can be stored in a storing vessel. Such a storing vessel can be any vessel known in the art suitable for storing slag.

It is preferred that the means for continuously transporting a first slag stream to the leaching reactor one or more conveyors, like belt conveyors or screw conveyors, depending on the state of the first slag stream.

Upstream from the leaching reactor the unit can comprise means for adapting the particle size of the slag particles in the first slag stream, such as a sieve or a mill. Thereby, the unit preferably comprises a first set of means for continuously transporting a first slag stream to the means for adapting the particle size of the slag particles in the first slag stream, such as a conveyor, like a belt conveyor or screw conveyor and a second set of means for continuously transporting the first slag stream from the means for adapting the particle size of the slag particles in the first slag stream to the leaching reactor, such as a conveyor, like a belt conveyor or screw conveyor.

The means for continuously transporting the first slag stream to the leaching reactor is preferably connected to an inlet of the leaching reactor.

The leaching reactor can be any leaching reactor suitable for continuously extracting metal compounds and/or other contaminations from a slag stream.

This means that the leaching reactor must have an inlet for the first slag stream through which the first slag stream is continuously introduced, an inlet for the washing fluid though which the washing fluid is continuously introduced, means for contacting the first slag stream and the washing fluid, an outlet, through which the second slag stream is continuously removed and an outlet, through which the washing fluid is continuously removed.

In one embodiment the first slag stream and the washing fluid are combined before being introduced into the leaching reactor as a single combined stream. In said embodiment only one inlet for continuously introducing the combined stream is needed. In a further embodiment the second slag stream and the washing fluid are separated after being removed from the leaching reactor as a single combined stream. In said embodiment only one outlet for continuously removing the combined stream is needed. The means for contacting the slag stream and the washing fluid in the leaching reactor can be any suitable means for mixing a particulate material with a liquid. Such means can be e.g. a stirrer, or a rotating washing drum, preferably a rotating washing drum.

In a preferred embodiment the leaching reactor comprises a housing, which comprises side walls, a bottom wall and a top wall, a washing drum, which is situated inside the housing and rotatably mounted outside the housing, an inlet for introducing the first slag stream from outside of the housing into the interior of the washing drum, an outlet for removing the slag stream from the interior of the washing drum to the outside of the housing, an inlet for introducing the washing liquid into the housing, an outlet for removing the washing liquid from the housing, and means for rotating the washing drum situated outside the housing, wherein the surfaces of the leaching reactor, which are in contact with the slag stream are prepared from non-corrosive and non-abrasive material, such as polymeric material and preferably can be exchanged.

The means for continuously transporting washing fluid to the leaching reactor is preferably a pipeline with which the washing fluid is pumped to the leaching reactor. The means for continuously transporting washing fluid to the leaching reactor is preferably connected to an inlet of the leaching reactor.

The means for continuously transporting a second slag stream from the leaching reactor is preferably a conveyor, like a belt conveyor or a screw conveyor, or a pipeline.

The means for continuously transporting a second slag stream from leaching reactor is preferably connected to an outlet of the leaching reactor.

The means for continuously transporting washing fluid comprising soluble metal compounds and/or soluble contaminations from the leaching reactor to the means for exchanging the washing fluid is preferably a pipeline with which the washing fluid is continuously removed, preferably pumped from the leaching reactor though an outlet. The means for continuously transporting washing fluid comprising soluble metal compounds and/or soluble contaminations from the leaching reactor to the means for exchanging the washing fluid is preferably connected to an outlet of the leaching reactor. The means for continuously transporting washing fluid comprising soluble metal compounds and/or soluble contaminations from the leaching reactor to the means for exchanging the washing fluid is preferably connected to an inlet of the means for exchanging the washing fluid.

The means for exchanging the washing fluid is preferably a mixing vessel.

The mixing vessel preferably comprises a housing, a mixing device such as a stirrer, an inlet for introducing the washing fluid comprising soluble metal compounds and/or soluble contaminations from the leaching reactor, an inlet for introducing a second washing fluid, and one or two outlets for removing a mixed washing fluid.

The unit preferably further comprises a storage vessel for a second washing fluid.

The storage vessel can be any vessel known in the art suitable for storing a second washing fluid, preferably an acidic washing fluid with a higher acid content than the washing fluid, preferably the acidic washing fluid, which has been removed from the leaching reactor, such as a protonic acid with an acid content of from 17.5 to 50.0 wt%.

Further, the unit preferably comprises means for transporting the second washing fluid from the storage vessel to the mixing vessel, preferably a pipeline with which the second washing fluid is transported, preferably pumped from the storage vessel to the mixing vessel.

The means for continuously transporting the second washing fluid from the storage vessel to the mixing vessel is preferably connected to an inlet of the mixing vessel. Further, the means for continuously transporting the second washing fluid from the storage vessel to the mixing vessel is preferably connected to an outlet of the storage vessel.

Still further, the unit preferably comprises means for continuously transporting a first stream of mixed washing fluid from the mixing vessel to the leaching reactor, preferably a pipeline with which the first stream of mixed washing fluid is transported, preferably pumped from the mixing vessel to the leaching reactor.

The means for continuously transporting a first stream of mixed washing fluid from the mixing vessel to the leaching reactor is preferably connected to an inlet of the leaching reactor.

The means for continuously transporting a first stream of mixed washing fluid from the mixing vessel to the leaching reactor is preferably connected to an outlet of the mixing vessel.

Additionally, the unit preferably comprises means for transporting a second stream of mixed washing fluid from the mixing vessel to the means for discarding the mixed washing fluid, preferably a pipeline with which the first stream of mixed washing fluid is transported, preferably pumped from the mixing vessel to the means for discarding the mixed washing fluid.

The means for transporting a second stream of mixed washing fluid from the mixing vessel to the means for discarding the mixed washing fluid is preferably connected to an inlet of the means for discarding the mixed washing fluid.

The means for transporting a second stream of mixed washing fluid from the mixing vessel to the means for discarding the mixed washing fluid is preferably connected to an outlet of the mixing vessel.

In one embodiment the mixing vessel comprises a single outlet for removing a stream of mixed washing fluid. In said embodiment a means for transporting a combined stream of mixed washing fluid from the mixing vessel is connected to the single outlet of the mixing vessel and is separated into the means for continuously transporting a first stream of mixed washing fluid from the mixing vessel to the leaching reactor and the means for transporting a second stream of mixed washing fluid from the mixing vessel to the means for discarding the mixed washing fluid downstream from the mixing vessel.

In a second embodiment the mixing vessel comprises two separate outlets for the means for continuously transporting a first stream of mixed washing fluid from the mixing vessel to the leaching reactor and the means for transporting a second stream of mixed washing fluid from the mixing vessel to the means for discarding the mixed washing fluid.

The means for discarding the mixed washing fluid can be any means suitable in the art for discarding a liquid, preferably an acidic liquid, which comprises soluble metal compounds and/or soluble other contaminations.

The means for discarding the mixed washing fluid can be a storage vessel.

In a preferred embodiment the unit further comprises
- a second leaching reactor downstream from the leaching reactor
- a second means for exchanging the washing fluid;
- means for continuously transporting the second slag stream from the leaching reactor to the second leaching reactor;
- means for continuously transporting washing fluid to the second leaching reactor;
- means for continuously transporting a third slag stream from the second leaching reactor;
- means for continuously transporting washing fluid comprising soluble metal compounds and/or soluble contaminations from the second leaching reactor to the second means for exchanging the washing fluid.

The embodiments of the leaching reactor as described above preferably also independently apply to the second leaching reactor.

It is preferred that the second leaching reactor is the same type of leaching reactor as the leaching reactor as described above.

The means for continuously transporting a second slag stream from the leaching reactor to the second leaching reactor is preferably a conveyor, like a belt conveyor, or a pipeline.

The means for continuously transporting a second slag stream from leaching reactor to the second leaching reactor is preferably connected to an outlet of the leaching reactor. The means for continuously transporting a second slag stream from leaching reactor to the second leaching reactor is preferably connected to an inlet of the second leaching reactor.

The means for continuously transporting washing fluid to the second leaching reactor is preferably a pipeline with which the washing fluid is transported, preferably pumped to the second leaching reactor.

The means for continuously transporting washing fluid to the second leaching reactor is preferably connected to an inlet of the second leaching reactor.

The means for continuously transporting a third slag stream from the second leaching reactor is preferably a conveyor, like a belt conveyor, or a pipeline.

The means for continuously transporting a third slag stream from second leaching reactor is preferably connected to an outlet of the second leaching reactor.

The means for continuously transporting washing fluid comprising soluble metal compounds and/or soluble contaminations from the second leaching reactor to the second means for exchanging the washing fluid is preferably a pipeline with which the washing fluid is continuously removed, preferably pumped from the second leaching reactor through an outlet.

The means for continuously transporting washing fluid comprising soluble metal compounds and/or soluble contaminations from the second leaching reactor to the second means for exchanging the washing fluid is preferably connected to an outlet of the second leaching reactor.

The means for continuously transporting washing fluid comprising soluble metal compounds and/or soluble contaminations from the second leaching reactor to the means for exchanging the washing fluid is preferably connected to an inlet of the second means for exchanging the washing fluid.

The second means for exchanging the washing fluid is preferably a second mixing vessel.

The second mixing vessel preferably comprises a housing, a mixing device such as a stirrer, an inlet for introducing the washing fluid comprising soluble metal compounds and/or soluble contaminations from the second leaching reactor, an inlet for introducing a second washing fluid, and one or two outlets for removing a mixed washing fluid.

Further, the unit preferably comprises means for transporting the second washing fluid from the storage vessel to the second mixing vessel, preferably a pipeline with which the second washing fluid is transported, preferably pumped from the storage vessel to the second mixing vessel.

The means for continuously transporting the second washing fluid from the storage vessel to the second mixing vessel is preferably connected to an inlet of the second mixing vessel.

Further, the means for continuously transporting the second washing fluid from the storage vessel to the second mixing vessel is preferably connected to an outlet of the storage vessel.

Still further, the unit preferably comprises means for continuously transporting a third stream of mixed washing fluid from the second mixing vessel to the second leaching reactor, preferably a pipeline with which the third stream of mixed washing fluid is transported, preferably pumped from the second mixing vessel to the second leaching reactor.

The means for continuously transporting a third stream of mixed washing fluid from the second mixing vessel to the second leaching reactor is preferably connected to an inlet of the second leaching reactor.

The means for continuously transporting a third stream of mixed washing fluid from the second mixing vessel to the leaching reactor is preferably connected to an outlet of the second mixing vessel.

Additionally, the unit preferably comprises means for transporting a fourth stream of mixed washing fluid from the second mixing vessel to the mixing vessel, preferably a pipeline with which the first stream of mixed washing fluid is transported, preferably pumped from the second mixing vessel to the mixing vessel.

The means for transporting a fourth stream of mixed washing fluid from the second mixing vessel to the mixing vessel is preferably connected to an inlet of the mixing vessel.

The means for transporting a fourth stream of mixed washing fluid from the second mixing vessel to the mixing vessel is preferably connected to an outlet of the second mixing vessel.

In one embodiment the second mixing vessel comprises a single outlet for removing a stream of mixed washing fluid. In said embodiment a means for transporting a combined stream of mixed washing fluid from the second mixing vessel is connected to the single outlet of the second mixing vessel and is separated into the means for continuously transporting a third stream of mixed washing fluid from the second mixing vessel to the second leaching reactor and the means for transporting a fourth stream of mixed washing fluid from the second mixing vessel to the mixing vessel downstream from the second mixing vessel.

In a second embodiment the second mixing vessel comprises two separate outlets for the means for continuously transporting a third stream of mixed washing fluid from the second mixing vessel to the second leaching reactor and the means for transporting a fourth stream of mixed washing fluid from the second mixing vessel to the mixing vessel.

The unit can comprise two or more leaching reactors, such as from two to five leaching reactors, preferably two to four leaching reactors more preferably two or three leaching reactors, most preferably two leaching reactors. The leaching reactors are preferably connected in series.

For each of the third to fifth leaching reactor the unit preferably comprises a configuration in all embodiments as described above for the second leaching reactor.

In another embodiment the unit comprises a single leaching reactor.

The unit preferably further comprises
- means for separating the solid slag particles from residual washing fluid in the second slag stream, or the third slag stream, when present, or the ultimate slag stream, when present;
- means for transporting the second slag stream from the leaching reactor, or when present, the third slag stream from the second leaching reactor, or when present, the ultimate slag stream from the ultimate leaching reactor, to the means for separating the solid slag particles from residual washing fluid in the second slag stream, or the third slag stream, when present, or the ultimate slag stream, when present;
- means for transporting the solid slag particles from the means for separating the solid slag particles from residual washing fluid in the second slag stream, or the third slag stream, when present, or the ultimate slag stream, when present;
- means for transporting the residual washing fluid from the means for separating the solid slag particles from residual washing fluid in the second slag stream, or the third slag stream, when present, or the ultimate slag stream, when present.

The means for separating the solid slag particles from residual washing fluid in the second slag stream, or the third slag stream, when present, or the ultimate slag stream, when present, can be any means known in the art suitable for separating solid particulate material from a liquid, such as a sieve, filter, membrane, sedimenter, centrifuge or others.

The means for separating the solid slag particles from residual washing fluid in the second slag stream, or the third slag stream, when present, or the ultimate slag stream, when present, preferably comprises an inlet for the second slag stream, or the third slag stream, when present, or the ultimate slag stream, when present.

The means for separating the solid slag particles from residual washing fluid in the second slag stream, or the third slag stream, when present, or the ultimate slag stream, when present, preferably comprises an outlet for the residual washing fluid.

The means for separating the solid slag particles from residual washing fluid in the second slag stream, or the third slag stream, when present, or the ultimate slag stream, when present, preferably comprises an outlet for the solid slag particles.

The means for transporting the second slag stream from the leaching reactor, or when present, the third slag stream from the second leaching reactor, or when present, the ultimate slag stream from the ultimate leaching reactor, to the means for separating the solid slag particles from residual washing fluid in the second slag stream, or the third slag stream, when present, or the ultimate slag stream, when present, is preferably a pipeline with which the second slag stream from the leaching reactor, or when present, the third slag stream from the second leaching reactor, or when present, the ultimate slag stream from the ultimate leaching reactor is transported, preferably pumped from the accordant leaching reactor to the means for transporting the second slag stream from the leaching reactor, or when present, the third slag stream from the second leaching reactor, or when present, the ultimate slag stream from the ultimate leaching reactor, to the means for separating the solid slag particles from residual washing fluid in the second slag stream, or the third slag stream, when present, or the ultimate slag stream, when present.

The accordant leaching reactor thereby is the ultimate downstream leaching reactor in any of the embodiments of the unit as described above.

The means for transporting the second slag stream from the leaching reactor, or when present, the third slag stream from the second leaching reactor, or when present, the ultimate slag stream from the ultimate leaching reactor, to the means for separating the solid slag particles from residual washing fluid in the second slag stream, or the third slag stream, when present, or the ultimate slag stream, when present, is preferably connected to an outlet of the accordant leaching reactor.

The means for transporting the second slag stream from the leaching reactor, or when present, the third slag stream from the second leaching reactor, or when present, the ultimate slag stream from the ultimate leaching reactor, to the means for separating the solid slag particles from residual washing fluid in the second slag stream, or the third slag stream, when present, or the ultimate slag stream, when present, is preferably connected to an inlet of the means for separating the solid slag particles from residual washing fluid in the second slag stream, or the third slag stream, when present, or the ultimate slag stream, when present.

The means for transporting the solid slag particles from the means for separating the solid slag particles from residual washing fluid in the second slag stream, or the third slag stream, when present, or the ultimate slag stream, when present, is preferably a conveyor, such as a belt conveyor.

The means for transporting the solid slag particles from the means for separating the solid slag particles from residual washing fluid in the second slag stream, or the third slag stream, when present, or the ultimate slag stream, when present, is preferably connected to an outlet of the means for separating the solid slag particles from residual washing fluid in the second slag stream, or the third slag stream, when present, or the ultimate slag stream.

The means for transporting the residual washing fluid from the means for separating the solid slag particles from residual washing fluid in the second slag stream, or the third slag stream, when present, or the ultimate slag stream, when present, is preferably a pipeline with which the residual washing fluid is transported, preferably pumped from the means for separating the solid slag particles from residual washing fluid in the second slag stream, or the third slag stream, when present, or the ultimate slag stream, when present.

The means for transporting the residual washing fluid from the means for separating the solid slag particles from residual washing fluid in the second slag stream, or the third slag stream, when present, or the ultimate slag stream, when present, is preferably connected to an outlet of the means for separating the solid slag particles from residual washing fluid in the second slag stream, or the third slag stream, when present, or the ultimate slag stream, when present.

The means for transporting the residual washing fluid from the means for separating the solid slag particles from residual washing fluid in the second slag stream, or the third slag stream, when present, or the ultimate slag stream, when present, is preferably connected to an inlet of any leaching reactor in the unit and/or an inlet of the means for discarding the mixed washing fluid.

Preferably the unit further comprises means for transporting a neutralizing fluid, preferably water or a basic fluid, such as water diluted alkali hydroxide, like water diluted sodium hydroxide, to the means for separating the solid slag particles from residual washing fluid, preferably residual acidic washing fluid in the second slag stream, or the third slag stream, when present, or the ultimate slag stream, when present.

The means for transporting a neutralizing fluid, preferably water or a basic fluid, such as water diluted alkali hydroxide, like water diluted sodium hydroxide, to the means for separating the solid slag particles from residual washing fluid, preferably residual acidic washing fluid in the second slag stream, or the third slag stream, when present, or the ultimate slag stream, when present, is preferably pipeline with which the neutralizing fluid is transported, preferably pumped to the means for separating the solid slag particles from residual washing fluid, preferably residual acidic washing fluid in the second slag stream, or the third slag stream, when present, or the ultimate slag stream, when present.

The means for transporting a neutralizing fluid, to the means for separating the solid slag particles from residual washing fluid, preferably residual acidic washing fluid in the second slag stream, or the third slag stream, when present, or the ultimate slag stream, when present, is preferably connected to an additional inlet of the means for separating the solid slag particles from residual washing fluid, preferably residual acidic washing fluid in the second slag stream, or the third slag stream, when present, or the ultimate slag stream, when present.

The means for transporting a neutralizing fluid, to the means for separating the solid slag particles from residual washing fluid, preferably residual acidic washing fluid in the second slag stream, or the third slag stream, when present, or the ultimate slag stream, when present, is preferably connected to an outlet of a storage vessel for storing the neutralizing fluid, when present.

The storing vessel, when present can be any vessel known in the art suitable for storing a basic fluid, such as water diluted alkali hydroxide, like water diluted sodium hydroxide. Such a storing vessel is usually not present in the unit in the case that water is used as neutralizing fluid.

The unit can further comprise means for discarding exhaust gas and means for transporting exhaust gas from any vessel of the unit to the means for discarding exhaust gas.

The means for discarding exhaust gas is preferably an adsorption vessel for adsorbing acid.

The means for transporting exhaust gas from any vessel of the unit to the means for discarding exhaust gas is preferably one or more pipeline(s).

The means for transporting exhaust gas from any vessel of the unit to the means for discarding exhaust gas is preferably connected to an inlet of the means for discarding exhaust gas.

The means for transporting exhaust gas from any vessel of the unit to the means for discarding exhaust gas is preferably connected to an outlet of any vessel in the unit. Vessels which can be connected to the means for transporting exhaust gas from any vessel of the unit to the means for discarding exhaust gas can be the leaching reactor(s), the mixing vessel(s) and the storage vessel for the second washing liquid.

### Detailed Description of the Figure

Fig. 1 shows a schematic drawing of a preferred embodiment of the invention in which two leaching reactors are connected in series.

A first slag stream is transported from a storage vessel (not shown) via a belt conveyor to a screen and an inlet chute, in which the particle size of the solid slag particles of the first slag stream are adapted, and a further dosing screw conveyor through line 20 to leaching reactor 1.

The first slag stream is continuously introduced into an inlet of leaching reactor 1.

The leaching reactor can comprise a housing, which comprises side walls, a bottom wall and a top wall, a washing drum, which is situated inside the housing and rotatably mounted outside the housing, an inlet for introducing the first slag stream from outside of the housing into the interior of the washing drum, an outlet for removing the slag stream from the interior of the washing drum to the outside of the housing, an inlet for introducing the washing liquid into the housing, an outlet for removing the washing liquid from the housing, and means for rotating the washing drum situated outside the housing, wherein the surfaces of the leaching reactor, which are in contact with the slag stream are prepared from non-corrosive and non-abrasive material, such as polymeric material and preferably can be exchanged.

In leaching reactor 1 the first slag stream is contacted with a washing liquid which can be an aqueous solution with about 6 % HCl.

The washing solution is continuously introduced into leaching reactor 1 via feeding line 1 through an inlet of leaching reactor 1.

The washing solution accumulates at the bottom of the housing of leaching reactor 1. The slag stream is continuously introduced into the washing drum, which is rotated within the housing as such that the solid slag particles of the slag stream are brought into contact with the washing liquid in the housing. Thereby, the washing liquid chemically reacts with metal compounds and/or other contaminations in the slag stream and solves these metal compounds and/or other contaminations in the washing liquid. Thereby, the acid in the washing liquid is depleted.

The second slag stream is continuously removed from leaching reactor 1 through an outlet and transported to leaching reactor 2 via feeding line 21 to the inlet of leaching reactor 2.

Leaching reactor 2 preferably has the same configuration as leaching reactor 1. Washing liquid, which again can be an aqueous solution with about 6 % HCl, is continuously introduced to leaching reactor 2 via feeding line 3 through an inlet of leaching reactor 2 and accumulates at the bottom of leaching reactor 2.

The second slag stream is continuously introduced into the washing drum, which is rotated within the housing as such that the solid slag particles of the slag stream are brought into contact with the washing liquid in the housing.

The third slag stream is continuously removed from leaching reactor 2 through an outlet and transported to a screen via line 22, in which the solid slag particles are separated from the residual washing fluid.

The solid slag particles are neutralized by a neutralizing liquid, which is introduced into the upper part of the screen. The neutralizing liquid can be water with 5% NaOH and/or process water.

The neutralized solid slag particles can be stored as coarse material.

The depleted washing liquid, which is continuously removed from leaching reactor 1 through an outlet at the bottom of leaching reactor 1, is transported via feeding line 2 to collection tank 1 in which the depleted washing liquid is mixed with a second washing liquid, which can be water with about 6% HCl.

The amount of second washing liquid introduced to collection tank 1 is selected as such that the washing liquid removed from collection tank 1 has about 6% HCl.

The second washing liquid is introduced from a dilution tank to collection tank 1 via feeding line 5.

The washing liquid, which is continuously removed from collection tank 1, is transported via feeding line 1 to leaching reactor 1 and continuously introduced via the inlet for washing liquid.

The washing liquid is therefore transported in a loop from leaching reactor 1 to collection tank 1 and back to leaching reactor 1.

A second stream of washing liquid is separated from the washing liquid recycled from collection tank 1 to leaching reactor 1 from feeding line 1 and is discarded via line 7.

By discarding part of the washing liquid, the amount of washing liquid in the loop is kept constant and part of the metal compounds and/or other contaminants solved in the washing liquid are removed from the loop so that these metal compounds and/or other contaminants do not accumulate in the washing liquid.

The depleted washing liquid, which is continuously removed from leaching reactor 2 through an outlet at the bottom of leaching reactor 2, is transported via feeding line 4 to collection tank 2 in which the depleted washing liquid is mixed with a second washing liquid, which can be water with about 6% HCl.

The amount of second washing liquid introduced to collection tank 2 is selected as such that the washing liquid removed from collection tank 2 has about 6% HCl.

The second washing liquid is introduced from a dilution tank to collection tank 1 via feeding line 6.

The washing liquid, which is continuously removed from collection tank 2, is transported via feeding line 3 to leaching reactor 2 and continuously introduced via the inlet for washing liquid.

The washing liquid is therefore transported in a loop from leaching reactor 2 to collection tank 2 and back to leaching reactor 2.

A second stream of washing liquid is separated from the washing liquid recycled from collection tank 2 to leaching reactor 2 from feeding line 3 and is introduced to collection tank 1 via feeding line 8.

Exhaust gas from leaching reactors 1 and 2, collection tanks 1 and 2 and the storage tank for the second washing fluid are collected and transported to an adsorption unit in which the acid is absorbed. The exhaust gas is then transported to the environment.

## Claims

1. A method for continuously extracting metal compounds and/or other contaminations from a slag stream comprising the steps of:
a) Continuously introducing a first slag stream comprising metal compounds and/or other contaminations into a leaching reactor;
b) Continuously introducing a washing fluid, preferably an acidic washing fluid into the leaching reactor;
c) Contacting the slag stream with the washing fluid, preferably the acidic washing fluid in the leaching reactor, whereby the washing fluid, preferably the acidic washing fluid chemically reacts with the metal compounds and/or other contaminations in the slag to obtain soluble metal compounds and/or soluble other contaminations;
d) Continuously removing a second slag stream from the leaching reactor;
e) Continuously removing washing fluid, preferably acidic washing fluid comprising soluble metal compounds and/or soluble other contaminations from the leaching reactor;
f) Continuously exchanging the washing fluid, preferably the acidic washing fluid, which has been removed from the leaching reactor,
whereby the weight content of the metal compounds and/or other contaminations in the second slag stream is lower than the weight content of the metal compounds and/or other contaminations in the first slag stream.

2. The method according to claim 1, wherein the washing fluid, preferably the acidic washing fluid is a water diluted protonic acid, preferably water diluted hydrochloric acid or water diluted sulphuric acid.

3. The method according to claim 2, wherein the washing fluid, preferably the acidic washing fluid has a content of protonic acid, preferably hydrochloric acid or sulphuric acid, in the range of from 1.0 to 15.0 %, preferably 2.5 to 12.5 %, more preferably from 3.5 to 10.0 %, most preferably from 5.0 to 7.5 %.

4. The method according to any one of the preceding claims, wherein the exchanging step f) comprises the following steps
- continuously introducing the washing fluid, preferably the acidic washing fluid, which has been removed from the leaching reactor into a mixing vessel;
- continuously introducing washing fluid, preferably acidic washing fluid with a higher acid content than the washing fluid, preferably the acidic washing fluid, which has been removed from the leaching reactor into the mixing vessel;
- mixing the washing fluid, preferably the acidic washing fluid, which has been removed from the leaching reactor and the washing fluid, preferably the acidic washing fluid with a higher acid content;
- continuously removing a first stream of mixed washing fluid, preferably mixed acidic washing fluid from the mixing vessel and continuously introducing said first stream into the leaching reactor in process step b);
- continuously removing a second stream of mixed washing fluid, preferably mixed acidic washing fluid from the mixing vessel and discarding said second stream,
wherein the amount of the washing fluid, preferably acidic washing fluid with a higher acid content is adjusted as such that the first stream of mixed washing fluid, preferably mixed acidic washing fluid, which has been removed from the mixing vessel has the same range of acid content as the washing fluid, preferably acidic washing fluid, which is introduced into the leaching reactor in process step b).

5. The method according to any one of the preceding claims further comprising the following steps:
g) Continuously introducing the second slag stream, which has been removed from the leaching reactor into a second leaching reactor;
h) Continuously introducing a washing fluid, preferably an acidic washing fluid into the second leaching reactor;
i) Contacting the slag stream with the washing fluid, preferably the acidic washing fluid in the second leaching reactor, whereby the washing fluid, preferably the acidic washing fluid chemically reacts with the metal compounds and/or other contaminations in the slag to obtain soluble metal compounds and/or soluble other contaminations;
j) Continuously removing a third slag stream from the second leaching reactor;
k) Continuously removing washing fluid, preferably acidic washing fluid comprising soluble metal compounds and/or soluble other contaminations from the second leaching reactor;
l) Continuously exchanging the washing fluid, preferably the acidic washing fluid, which has been removed from the second leaching reactor.

6. The method according to claim 7, wherein the exchanging step I) comprises the following steps
- continuously introducing the washing fluid, preferably the acidic washing fluid, which has been removed from the second leaching reactor into a second mixing vessel;
- continuously introducing washing fluid, preferably acidic washing fluid with a higher acid content than the washing fluid, preferably the acidic washing fluid, which has been removed from the second leaching reactor into the second mixing vessel;
- mixing the washing fluid, preferably the acidic washing fluid, which has been removed from the second leaching reactor and the washing fluid, preferably the acidic washing fluid with a higher acid content;
- continuously removing a third stream of mixed washing fluid, preferably mixed acidic washing fluid from the second mixing vessel and continuously introducing said third stream into the second leaching reactor in process step h);
- continuously removing a fourth stream of mixed washing fluid, preferably mixed acidic washing fluid from the second mixing vessel and discarding said fourth stream,
wherein the amount of the acidic fluid with a higher acid content is adjusted as such that the third stream of mixed acidic fluid, which has been removed from the second mixing vessel has the same range of acid content as the acidic fluid, which is introduced into the second leaching reactor in process step h).

7. The method according to any one of the preceding claims, wherein the solid slag particles in the second slag stream are separated from residual washing fluid, preferably residual acidic washing fluid, which has been removed from the leaching reactor or, when present, in the third slag stream, which has been removed from the second leaching reactor.

8. The method according to claim 7, wherein the solid slag particles are contacted with a neutralizing fluid, preferably water or a basic fluid, such as water diluted alkali hydroxide, like water diluted sodium hydroxide, to neutralize the solid slag particles.

9. A unit for continuously extracting metal compounds and/or other contaminations from a slag stream comprising
- a leaching reactor;
- means for exchanging the washing fluid, preferably the acidic washing fluid;
- means for continuously transporting a first slag stream to the leaching reactor;
- means for continuously transporting washing fluid, preferably the acidic washing fluid to the leaching reactor;
- means for continuously transporting a second slag stream from the leaching reactor;
- means for continuously transporting washing fluid, preferably acidic washing fluid comprising soluble metal compounds and/or soluble contaminations from the leaching reactor to the means for exchanging the washing fluid, preferably the washing acidic fluid.

10. The unit according to claim 9, wherein the means for exchanging the washing fluid, preferably the acidic washing fluid is a mixing vessel and the unit further comprises
- a storage vessel for a second washing fluid, preferably an acidic washing fluid with a higher acid content than the washing fluid, preferably the acidic washing fluid, which has been removed from the leaching reactor;
- means for discarding the mixed washing fluid, preferably the mixed acidic washing fluid;
- means for transporting the second washing fluid, preferably the acidic fluid with a higher acid content from the storage vessel to the mixing vessel;
- means for continuously transporting a first stream of mixed washing fluid, preferably mixed acidic washing fluid from the mixing vessel to the leaching reactor;
- means for transporting a second stream of mixed washing fluid, preferably mixed acidic washing fluid from the mixing vessel to the means for discarding the mixed washing fluid, preferably the mixed acidic fluid.

11. The unit according to claims 9 or 10 further comprising
- a second leaching reactor downstream from the leaching reactor;
- a second means for exchanging the washing fluid, preferably the acidic washing fluid;
- means for continuously transporting the second slag stream from the leaching reactor to the second leaching reactor;
- means for continuously transporting washing fluid, preferably acidic washing fluid to the second leaching reactor;
- means for continuously transporting a third slag stream from the second leaching reactor;
- means for continuously transporting washing fluid, preferably acidic washing fluid comprising soluble metal compounds and/or soluble contaminations from the second leaching reactor to the second means for exchanging the washing fluid, preferably the acidic washing fluid.

12. The unit according to claim 11, wherein the second means for exchanging the washing fluid, preferably the acidic washing fluid is a second mixing vessel and the unit further comprises
- means for transporting the washing fluid, preferably the acidic washing fluid with a higher acid content from the storage vessel to the second mixing vessel;
- means for transporting a third stream of exchanged washing fluid, preferably the exchanged acidic washing fluid from the second mixing vessel to the second leaching reactor;
- means for transporting a fourth stream of exchanged washing fluid, preferably exchanged acidic washing fluid from the second mixing vessel to the means for discarding the exchanged washing fluid, preferably the exchanged acidic washing fluid.

13. The unit according to any one of claims 9 to 12 further comprising
- means for separating the solid slag particles from residual washing fluid, preferably residual acidic washing fluid in the second slag stream, or the third slag stream, when present;
- means for transporting the second slag stream from the leaching reactor, or when present, the third slag stream from the second leaching reactor, to the means for separating the solid slag particles from residual washing fluid, preferably residual acidic washing fluid in the second slag stream, or the third slag stream, when present;
- means for transporting the solid slag particles from the means for separating the solid slag particles from residual washing fluid, preferably residual acidic washing fluid in the second slag stream, or the third slag stream, when present;
- means for transporting the residual washing fluid, preferably residual acidic washing fluid from the means for separating the solid slag particles from residual washing fluid, preferably residual acidic washing fluid in the second slag stream, or the third slag stream, when present.

14. The unit according to any one of claims 9 to 13, further comprising
- means for transporting a neutralizing fluid, preferably water or a basic fluid, such as water diluted alkali hydroxide, like water diluted sodium hydroxide, to the means for separating the solid slag particles from residual washing fluid, preferably residual acidic washing fluid in the second slag stream, or the third slag stream, when present.

15. Use of the method according to any one of claims 1 to 8 and/or the unit according to any one of claims 9 to 14 for continuously extracting metal compounds and/or other contaminations from a slag stream.
